# EUROPÄISCHE PATENTSCHRIFT

(11) **EP 0 427 885 B1**
(45) Veröffentlichungstag und Bekanntmachung des Hinweises auf die Patenterteilung: **18.01.1995**
(21) Anmeldenummer: 89121204.5
(22) Anmeldetag: 16.11.1989
(51) Int. Cl.: H01H 3/32, H01H 1/22, H01H 3/54, F16D 21/08

(54) **Schaltwellenschelle für einen Leistungsschalter**
Switch shaft holder for circuit breaker
Porte-queue d'un disjoncteur

(43) Veröffentlichungstag der Anmeldung: 22.05.1991
(73) Patentinhaber: Licentia Patent-Verwaltungs-GmbH, 60596 Frankfurt (DE)
(72) Erfinder: Petrus, Eduard, D-2351 Wasbek (DE)
(74) Vertreter: Vogl, Leo, Dipl.-Ing.

(56) Entgegenhaltungen:
- EP-A- 0 065 234
- FR-A- 1 130 150
- GB-A- 862 731

## Beschreibung

Die Erfindung betrifft eine Schaltwellenschelle für einen Leistungsschalter gemäß dem Oberbegriff des Anspruchs 1.

Aus der DE-A-12 72 423 ist eine Schaltwellenschelle bekannt, die zweiteilig ausgeführt ist und mittels zwei Klemmschrauben auf eine vierkantige Schaltwelle geklemmt ist, die mit elektrisch isolierendem Material umpreßt ist.

Der Erfindung liegt die Aufgabe zugrunde, eine Schaltwellenschelle zu schaffen, die einen geringen Montageaufwand für einen festen Sitz auf der Schaltwelle benötigt. Die Schaltwellenschelle soll so ausgeführt sein, daß eine thermisch aufgepreßte Umhüllung der Schaltwelle, mit der die elektrische Isolierung der Schaltwelle bewirkt wird, entfallen kann.

Diese Aufgabe wird erfindungsgemäß durch die im Anspruch 1 angegebenen Merkmale gelöst.

Die Erfindung hat den Vorteil, daß bei geringem Montageaufwand ein fester Sitz der Schaltwellenschelle erreicht wird. Durch die einstückige, allseitig geschlossene Schaltwellenschelle aus elektrischem Isolierstoff ist die Schaltwelle im Bereich der Schaltwellenschelle vollkommen elektrisch isoliert.

Weiterbildungen der Erfindung sind in den Unteransprüchen angegeben.

Anhand der Zeichnung wird ein Ausführungsbeispiel der Erfindung näher erläutert.

Es zeigen:

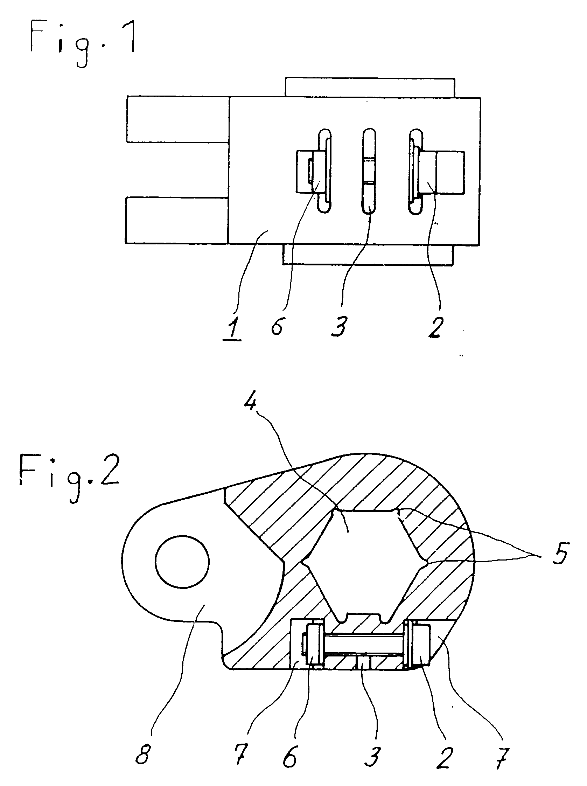

- Figur 1: eine Schaltwellenschelle,
- Figur 2: ein Längsschnitt einer Schaltwellenschelle.

Die Figuren zeigen eine Schaltwellenschelle 1 mit einer Klemmschraube 2 und einer Mutter 6. Die Schaltwellenschelle 1 hat einen Klemmschlitz 3, der die Wandung nur teilweise durchdringt, so daß die Schaltwellenschelle 1 vollkommen geschlossen ist. Die Öffnung 4 der Schaltwellenschelle 1 ist ebenso wie der Querschnitt der, in der Figur nicht dargestellten, Schaltwelle von sechseckiger Form. Die Schaltwellenschelle weist Ausnehmungen 7 auf, in denen der Kopf der Klemmschraube 2 und die Mutter 6 versenkt ist. Die Bohrung für die Klemmschraube 2 läuft mit Abstand zur Öffnung 4 in der Wandung der Schaltwellenschelle 1. An angeformten Ansätzen 8 wird das Verbindungselement angelenkt, das auf den beweglichen Kontaktarm einwirkt. Die Schaltwellenschelle besteht aus elastischem Kunststoff. Die Elastizität des Materials ermöglicht eine Klemmwirkung über die Klemmschraube 2 bei allseitig geschlossener Schaltwellenschelle 1. Dazu ist die Öffnung 4 der Schaltwellenschelle mit Quetschecken 5 versehen, die Materialverformungen aufnehmen. Das elastische Material besitzt andererseits genügend Steifigkeit, damit eine stabile Anlenkung des Verbindungselementes an die Ansätze 8 gewährleistet ist. Zwischen den Einzelnen Schaltwellenschellen 1 können auf die Schaltwelle Abstandhülsen aus Kunststoff aufgezogen sein, welche gleichzeitig die Oberfläche der Schaltwelle elektrisch isolieren. Damit kann die zum Zwecke der elektrischen Isolierung thermisch aufgepreßte Umhüllung der Schaltwelle entfallen.

## Patentansprüche

1. Schaltwellenschelle für einen Leistungsschalter, der Kontaktsysteme enthält, bei denen die Wirkverbindung zwischen dem beweglichen Kontaktarm und der Schaltwelle über eine Schaltwellenschelle (1) erfolgt, die elektrisch isoliert auf der Schaltwelle sitzt, dadurch gekennzeichnet, daß die Schaltwellenschelle (1) als einstückiges Bauteil ausgeführt ist und aus einem elektrisch isolieren dem elastischem Kunststoff besteht, daß die Schaltwellenschelle (1) mittels einer Klemmschraube (2) und eines die Wandung der Schaltwellenschelle (1) nicht vollständig durchdringenden Klemmschlitzes (3) auf die Schaltwelle geklemmt ist, und daß die Klemmschraube (2) elektrisch isoliert in der Wandung der Schaltwellenschelle (1) geführt ist.

2. Schaltwellenschelle nach Anspruch 1, dadurch gekennzeichnet, daß die Schaltwellenschelle (1) mit ihrer Öffnung (4) der Schaltwelle bei gelockerter Klemmschraube (2) gutgleitend angepaßt ist.

3. Schaltwellenschelle nach Anspruch 2, dadurch gekennzeichnet, daß die Öffnung (4) der Schaltwellenschelle (1) Quetschecken (5) aufweist.

4. Schaltwellenschelle nach einem der Ansprüche 1 bis 3, dadurch gekennzeichnet, daß der Kopf der Klemmschraube (2) und die Mutter (6) in Ausnehmungen (7) der Wandung der Schaltwellenschelle (1) aufgenommen sind.

5. Schaltwellenschelle nach einem der Ansprüche 1 bis 4, dadurch gekennzeichnet, daß die Schaltwelle und die Öffnung (4) der Schaltwellenschelle (1) einen sechseckigen Querschnitt aufweisen.

## Claims

1. Switch shaft clamp for a circuitbreaker, which contains contact systems, in which the operative connection between the movable contact arm and the switch shaft takes place by way of a switch shaft clamp (1), which is seated electrically insulated on the switch shaft, characterised thereby that the switch shaft clamp (1) is constructed as an integral component and consists of an electrically insulating resilient synthetic material, that the switch shaft clamp (1) is clamped on the switch shaft by means of a clamping screw (2) and a clamping slot (3) not completely penetrating the wall of the switch shaft clamp (1), and that the clamping screw (2) is guided electrically insulated in the wall of the switch shaft clamp (1).

2. Switch shaft clamp according to claim 1, characterised thereby that the switch shaft clamp (1) is matched to the switch shaft by its opening (4) to slide well when the clamping screw (2) is loosened.

3. Switch shaft clamp according to claim 2, characterised thereby that the opening (4) of the switch shaft clamp (1) has pinch corners (5).

4. Switch shaft clamp according to one of claims 1 to 3, characterised thereby that the head of the clamping screw (2) and the nut (6) are received in recesses (7) of the wall of the switch shaft clamp (1).

5. Switch shaft clamp according to one of claims 1 to 4, characterised thereby that the switch shaft and the opening (4) of the switch shaft clamp (1) have a hexagonal cross-section.

## Revendications

1. Porte-queue d'un disjoncteur qui comprend des systèmes de contact pour lesquels la liaison active entre le bras de contact mobile et l'arbre de commutation s'effectue par l'intermédiaire d'un porte-queue (1) qui repose sur l'arbre de commutation et est isolé électriquement, caractérisé en ce que le porte-queue (1) est conçu comme un élément en une seule pièce et se compose d'une matière plastique élastique isolante à l'électricité, en ce que le porte-queue (1) est serré sur l'arbre de commutation au moyen d'une vis de serrage (2) et d'une fente de serrage (3) ne traversant pas complètement la paroi du porte-queue (1) et en ce que la vis de serrage (2) isolée électriquement est guidée dans la paroi du porte-queue (1).

2. Porte-queue selon la revendication 1, caractérisé en ce que l'ouverture (4) du porte-queue (1) est adaptée à l'arbre de commutation pour coulisser correctement quand la vis de serrage (2) est desserrée.

3. Porte-queue selon la revendication 2, caractérisé en ce que l'ouverture (4) du porte-queue (1) présente des coins comprimés (5).

4. Porte-queue selon l'une des revendications 1 à 3, caractérisé en ce que la tête de la vis de serrage (2) et l'écrou (6) viennent se loger dans des évidements (7) de la paroi du porte-queue (1).

5. Porte-queue selon l'une des revendications 1 à 4, caractérisé en ce que l'arbre de commutation et l'ouverture (4) du porte-queue (1) présentent une section transversale hexagonale.
